# EUROPEAN PATENT APPLICATION

(11) **EP 4 786 911 A1**
(43) Date of publication of application: **05.08.2026**
(21) Application number: 24872606.9
(22) Date of filing: 30.09.2024
(51) Int. Cl.: F28F 21/08, B23K 1/00, B23K 1/19, F28D 1/04, F28F 9/02, F28F 9/18, B23K 101/14, B23K 103/10

(54) **HEAT EXCHANGER, METHOD FOR MANUFACTURING SAME, AND REFRIGERATION DEVICE**

(30) Priority: 29.09.2023 JP 2023170912
(71) Applicant: Daikin Industries, Ltd., Osaka-shi, Osaka 530-0001 (JP)
(72) Inventor: YAMADA, Koju, Osaka-shi, Osaka 530-0001 (JP)
(74) Representative: Hoffmann Eitle
(86) International application number: PCT/JP2024/035029
(87) International publication number: WO 2025/070827

(57) **Abstract**

A heat exchanger (13) includes a first member (41), a second member (42), and a latch (43). The first member (41) is provided with a first hole (41a) and is made of aluminum. The second member (42) is provided with a second hole (42a) and is made of aluminum. The latch (43) penetrates the first hole (41a) and the second hole (42a). The latch (43) is fixed to the first member (41) and the second member (42). The latch (43) is made of an aluminum alloy containing manganese by 1.5% or less and copper by 1.0% or less.

## Description

### TECHNICAL FIELD

The present disclosure relates to a heat exchanger used for a refrigeration apparatus and a method of manufacturing the heat exchanger.

### BACKGROUND ART

Patent Literature 1 (Japanese Laid-Open Patent Publication No. 2021-025718A) discloses a heat exchanger including a stacked header. The stacked header includes a plurality of plates. Some of the plates are provided with a brazing filler material. The stacked plates are fixed by furnace brazing to constitute the stacked header.

### SUMMARY OF THE INVENTION

### <Technical Problem>

A stack is likely to be affected by vibration during furnace brazing. Displacement of plates due to vibration adversely affects reliability of a heat exchanger. The stack is preliminarily fixed prior to furnace brazing for prevention of such displacement. There are various methods for preliminary fixing, such as welding, pipe expansion, and swaging. However, each of these methods needs dedicated equipment, and the cost therefore is passed onto the cost for a stacked header and a heat exchanger.

### <Solution to Problem>

A heat exchanger according to a first aspect includes a first member, a second member, and a latch. The first member is provided with a first hole and is made of aluminum. The second member is provided with a second hole and is made of aluminum. The latch is disposed in the first hole and the second hole. The latch is fixed to the first member and the second member. The latch is made of an aluminum alloy containing manganese by 1.5% or less and copper by 1.0% or less.

With this configuration, the latch is made of an aluminum alloy containing manganese by 1.5% or less as well as copper by 1.0% or less. The latch is less likely to repel a brazing filler material or induce galvanic corrosion, and is therefore easily fixed to the first member and the second member. This eliminates the need for complicated steps of welding, pipe expansion, swaging, or the like in the manufacturing process.

A heat exchanger according to a second aspect is the heat exchanger according to the first aspect, and further includes a stacked header. At least one of the first member or the second member is a plate to be stacked in the stacked header.

With this configuration, the latch is used for assembling the stacked header. The stacked header is thus easily assembled to achieve a cost reduction for the heat exchanger.

A heat exchanger according to a third aspect is the heat exchanger according to the first or second aspect, in which the second hole is a screw hole. The latch has a surface in a sawtooth shape for engagement with the screw hole.

With this configuration, the latch and the screw hole are engaged with each other. The first member and the second member are thus fixed firmly.

A heat exchanger according to a fourth aspect is the heat exchanger according to any one of the first to third aspects, in which both a first potential difference generated by contact between the latch and the first member and a second potential difference generated by contact between the latch and the second member are 100 mV or less.

With this configuration, galvanic current is less likely to flow between the first member or the second member and the latch. The latch is thus less likely to cause peripheral metal corrosion.

A heat exchanger according to a fifth aspect is the heat exchanger according to any one of the first to fourth aspects, in which the latch is made of a material expressed by a number in the 3000s or 4000s according to the ISO standards for aluminum alloys.

With this configuration, the latch and the first member or the second member are made of an identical material, or the latch and the brazing filler material are made of an identical material. Accordingly, this configuration is less likely to cause galvanic corrosion at a contact site between members and so as to enhance reliability of the heat exchanger.

A heat exchanger according to a sixth aspect is the heat exchanger according to the fifth aspect, in which the aluminum alloy is expressed by a number in the 3000s according to the ISO standards for aluminum alloys. The latch is brazed to both the first member and the second member.

With this configuration, the latch and the first member or the second member are made of an identical material. Accordingly, a contact site between members does not cause galvanic corrosion.

A heat exchanger according to a seventh aspect is the heat exchanger according to the fifth aspect, in which the aluminum alloy is expressed by a number in the 4000s according to the ISO standards for aluminum alloys.

With this configuration, the latch is constituted by a brazing filler material. Accordingly, a contact site between members is less likely to cause corrosion because galvanic current generated at the contact site is small enough to be ignored.

A refrigeration apparatus according to an eighth aspect includes the heat exchanger according to any one of the first to seventh aspects.

With this configuration, the refrigeration apparatus is equipped with a heat exchanger that is corrosion-resistant and inexpensive. The refrigeration apparatus thus lasts longer and costs less.

A manufacturing method according to a ninth aspect relates to a method of manufacturing a heat exchanger. The manufacturing method includes preparing a first member provided with a first hole and made of aluminum, and a second member provided with a second hole and made of aluminum. The method includes preparing a latch made of an aluminum alloy containing manganese by 1.5% or less and copper by 1.0% or less. The latch is disposed in the first hole and the second hole to form an assembly. The assembly is heated in a furnace to fix the latch to the first member and the second member.

With this method, the latch is made of an aluminum alloy containing manganese by 1.5% or less as well as copper by 1.0% or less. The latch is less likely to repel a brazing filler material and have galvanic corrosion, and is thus easily fixed to the first member and the second member. A manufacturing process accordingly needs no complicated step of welding, pipe expansion, swaging, or the like.

A manufacturing method according to a tenth aspect is the manufacturing method according to the ninth aspect, in which the second hole is a screw hole. The latch is a bolt.

With this method, the latch constituted as the bolt and the second hole constituted as the screw hole are engaged with each other. The first member and the second member are thus fixed firmly.

A manufacturing method according to an eleventh aspect is the manufacturing method according to the tenth aspect, in which is the bolt is fastened with fastening torque having a value equal to or less than 0.3 N·m.

With this method, the bolt is fastened with weak fastening force. Accordingly, the bolt is less likely to be broken.

A manufacturing method according to a twelfth aspect is the manufacturing method according to any one of the ninth to eleventh aspects, in which the assembly is mounted on a conveyor before the assembly is heated in the furnace.

With this method, the assembly is mounted on the conveyor. This stabilizes conveyance in the furnace.

A manufacturing method according to a thirteenth aspect is the manufacturing method according to any one of the ninth to twelfth aspects, in which the latch is made of a material expressed by a number in the 3000s according to the ISO standards for aluminum alloys. The assembly is provided with a brazing filler material before the assembly is heated in the furnace.

With this method, the latch and the first member or the second member are made of an identical material. Accordingly, a contact site between members does not cause galvanic corrosion.

A manufacturing method according to a fourteenth aspect is the manufacturing method according to any one of the ninth to twelfth aspects, in which the latch is made of a material expressed by a number in the 4000s according to the ISO standards for aluminum alloys. The latch is melted when the assembly is heated in the furnace.

With this method, the latch is constituted by a brazing filler material. Accordingly, a contact site between members is less likely to cause corrosion because galvanic current generated at the contact site is small enough to be ignored.

### BRIEF DESCRIPTION OF THE DRAWINGS

FIG. 1 is a schematic view of a refrigeration apparatus 100.
FIG. 2 is a schematic view of a heat source heat exchanger 13.
FIG. 3 is a perspective view of the heat source heat exchanger 13.
FIG. 4 is a perspective view of a stacked header.
FIG. 5 is a perspective view of the entirety of a first header 51.
FIG. 6 is a perspective view of an end of the first header 51.
FIG. 7 is a perspective view depicting a portion, connected with a gas-side pipe 61, of the first header 51.
FIG. 8 is a perspective view of the entirety of a second header 52.
FIG. 9 is a perspective view depicting a portion, where a plurality of turn-back pipes 81 is retained, on the second header 52.
FIG. 10 is a schematic view of manufacturing equipment for the heat source heat exchanger 13.
FIG. 11 is a schematic view depicting a first step in a manufacturing method according to a first embodiment.
FIG. 12 is a schematic view depicting a second step in the manufacturing method according to the first embodiment.
FIG. 13 is a schematic view depicting a third step in the manufacturing method according to the first embodiment.
FIG. 14 is a schematic view depicting a first step in a manufacturing method according to a first modification example of the first embodiment.
FIG. 15 is a schematic view depicting a second step in the manufacturing method according to the first modification example of the first embodiment.
FIG. 16 is a schematic view depicting a third step in the manufacturing method according to the first modification example of the first embodiment.
FIG. 17 is a schematic view according to a third modification example of the first embodiment.
FIG. 18 is a schematic view depicting a first step in a manufacturing method according to a second embodiment.
FIG. 19 is a schematic view depicting a second step in the manufacturing method according to the second embodiment.
FIG. 20 is a schematic view depicting a third step in the manufacturing method according to the second embodiment.
FIG. 21 is a diagram illustrating a state in which the wettability between a latch 43 and a brazing filler material 44 is bad.
FIG. 22 is a diagram illustrating a state in which the wettability between a latch 43 and a brazing filler material 44 is moderate.
FIG. 23 is a diagram illustrating a state in which the wettability between a latch 43 and a brazing filler material 44 is good.

### DESCRIPTION OF EMBODIMENTS

### <Common configurations to the embodiments>

### (1) Entire configuration

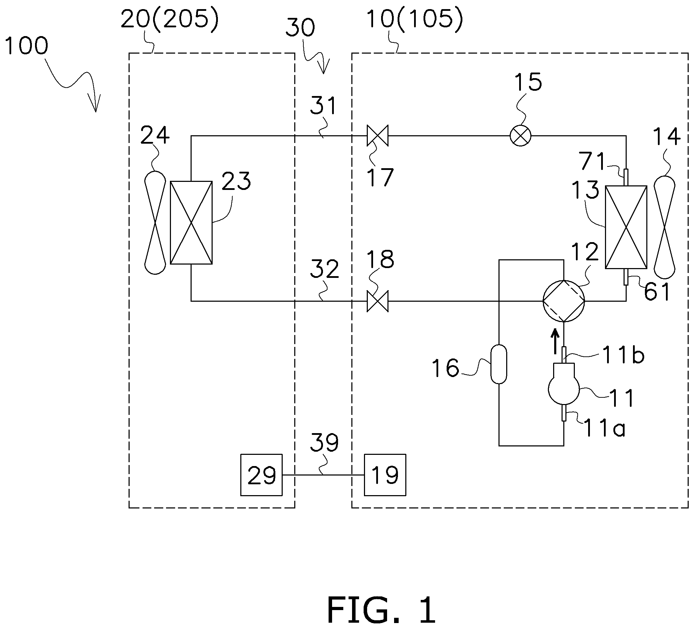

FIG. 1 is a schematic view of a refrigeration apparatus 100. The refrigeration apparatus 100 may be an air conditioner, a freezer, a refrigerator, a hot water supplier, or a floor heater. The refrigeration apparatus 100 includes a heat source unit 10, a utilization unit 20, and a connection pipe group 30. These elements constitute a refrigerant circuit for circulating the refrigerant. The refrigeration apparatus 100 further includes a communication line 39.

### (2) Detailed configurations

### (2-1) Heat source unit 10

The heat source unit 10 is configured to acquire cold heat or hot heat from a heat source. The heat source unit 10 includes a heat source casing 105, a compressor 11, a four-way switching valve 12, a heat source heat exchanger 13, a heat source fan 14, a heat source expansion valve 15, an accumulator 16, a liquid shutoff valve 17, a gas shutoff valve 18, and a heat source control unit 19.

The compressor 11 sucks a low-pressure gas refrigerant from a suction pipe 11a, compresses it to generate a high-pressure gas refrigerant, and discharges it refrigerant from a discharge pipe 11b.

The four-way switching valve 12 constitutes connection indicated by solid lines during the cold heat utilization operation and constitutes connection indicated by broken lines during the hot heat utilization operation.

During the cold heat utilization operation, the heat source heat exchanger 13 functions as a condenser. In this case, the heat source heat exchanger 13 receives a high-pressure gas refrigerant from a gas-side pipe 61 and discharges a high-pressure liquid refrigerant from a liquid-side pipe 71. During the hot heat utilization operation, the heat source heat exchanger 13 functions as an evaporator. In this case, the heat source heat exchanger 13 receives a low-pressure gas-liquid two-phase refrigerant from the liquid-side pipe 71 and discharges a low-pressure gas refrigerant from the gas-side pipe 61. The detailed structure of the heat source heat exchanger 13 will be described later.

The heat source fan 14 generates an air flow passing through the heat source heat exchanger 13 to promote heat exchange in the heat source heat exchanger 13.

The heat source expansion valve 15 decompresses a high-pressure liquid refrigerant to generate a low-pressure gas-liquid two-phase refrigerant.

The accumulator 16 separates a fluid component contained in a gas refrigerant and reserves the fluid component in a container.

The liquid shutoff valve 17 and the gas shutoff valve 18 are closed by an installation worker in order to shut off the refrigerant circuit.

The heat source control unit 19 acquires output values of various sensors and controls various actuators.

### (2-2) Utilization unit 20

The utilization unit 20 provides a user with cold heat or hot heat. The utilization unit 20 includes a utilization casing 205, a utilization heat exchanger 23, a utilization fan 24, and a utilization control unit 29.

The utilization heat exchanger 23 functions as an evaporator during the cold heat utilization operation and functions as a condenser during the hot heat utilization operation.

The utilization fan 24 generates an air flow passing through the utilization heat exchanger 23 to promote heat exchange in the utilization heat exchanger 23. The utilization fan 24 also delivers conditioned air to a user in a case where the refrigeration apparatus 100 is an air conditioner.

The utilization control unit 29 acquires the output values of various sensors, controls various actuators, and communicates with the heat source control unit 19.

### (2-3) Connection pipe group 30

The connection pipe group 30 includes a liquid connection pipe 31 and a gas connection pipe 32. The liquid connection pipe 31 connects the liquid shutoff valve 17 and the utilization heat exchanger 23. The gas connection pipe 32 connects the gas shutoff valve 18 and the utilization heat exchanger 23.

### (2-4) Communication line 39

The communication line 39 connects the heat source control unit 19 and the utilization control unit 29. The heat source control unit 19 and the utilization control unit 29 send and receive commands, statuses, and data via the communication line 39.

### <First embodiment>

### (1) Detailed configuration of the heat source heat exchanger 13

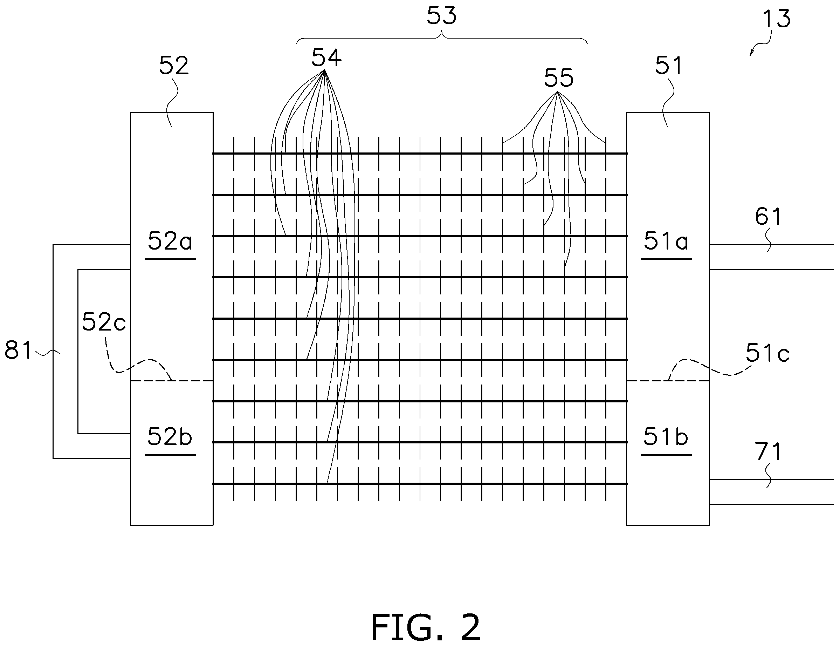

FIG. 2 schematically depicts the structure of the heat source heat exchanger 13 according to the first embodiment. The heat source heat exchanger 13 includes a first header 51, a second header 52, a heat exchange unit 53, the gas-side pipe 61, the liquid-side pipe 71, and a turn-back pipe 81.

### (1-1) First header 51

The first header 51 is a stacked header including a plurality of stacked plates. The plates to be stacked are made of aluminum, and their material is typically expressed by a number in the 3000s according to the ISO standards for aluminum alloys. Aluminum alloys expressed by numbers in the 3000s are aluminum-manganese based alloys, examples of which include No. 3003 and No. 3004.

The first header 51 includes a first gas chamber 51a and a first liquid chamber 51b formed by cavities or the like provided in the plates. There may alternatively be provided a plurality of first gas chambers 51a and a plurality of first liquid chambers 51b. Part of the plates function as a first partition wall 51c separating the first gas chamber 51a from the first liquid chamber 51b. The gas-side pipe 61 and the liquid-side pipe 71 are connected to the first header 51. The gas-side pipe 61 is connected to the first gas chamber 51a. The liquid-side pipe 71 is connected to the first liquid chamber 51b.

### (1-2) Second header 52

Similarly to the first header 51, the second header 52 is also a stacked header including a plurality of stacked plates. The material of the plates are typically expressed by a number in the 3000s according to the ISO standards for aluminum alloys. The second header 52 includes a second gas chamber 52a and a second liquid chamber 52b formed by cavities or the like provided in the plates. There may alternatively be provided a plurality of second gas chambers 52a and a plurality of second liquid chambers 52b. Part of the plates function as a second partition wall 52c separating the second gas chamber 52a from the second liquid chamber 52b. The turn-back pipe 81 is connected to the second header 52. The second gas chamber 52a and the second liquid chamber 52b are connected to each other via the turn-back pipe 81.

### (1-3) Heat exchange unit 53

The heat exchange unit 53 includes a plurality of refrigerant pipes 54 and a plurality of fins 55 attached to the refrigerant pipes 54. Each of the refrigerant pipes 54 connects the first gas chamber 51a and the second gas chamber 52a or connects the first liquid chamber 51b and the second liquid chamber 52b.

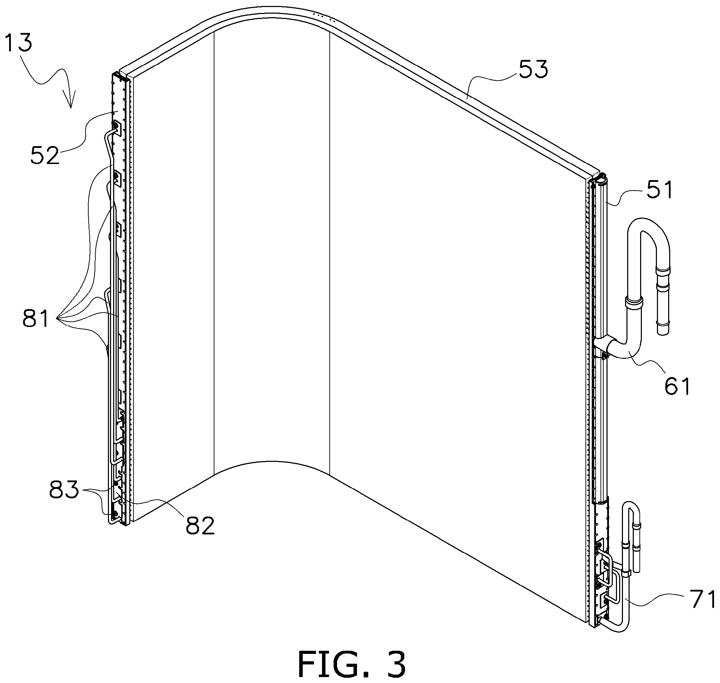

FIG. 3 realistically depicts the structure of the heat source heat exchanger 13. The entire heat exchange unit 53 constitutes an upright wall, and has an L shape in a planar view.

### (1-4) Periphery of the gas-side pipe 61

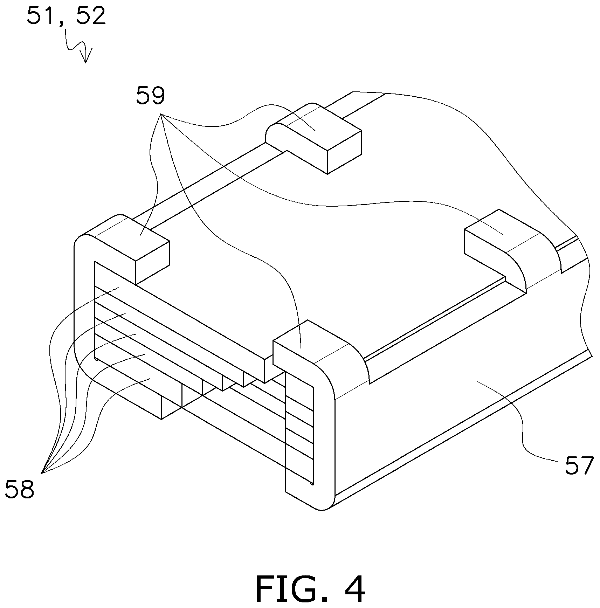

FIG. 4 depicts a structure at an end of the first header 51. The first header 51 includes a plurality of stacked plates 58 made of an aluminum alloy, and an outer wall member 57 surrounding them and made of an aluminum alloy. The outer wall member 57 is provided with a plurality of swaging claws 59. The swaging claws 59 are bent to bind the plurality of plates 58. At least part of the plurality of plates 58 and the outer wall member 57 is a clad material provided with a rolled brazing filler material. The plurality of plates 58 and the outer wall member 57 are fixed to each other by furnace brazing.

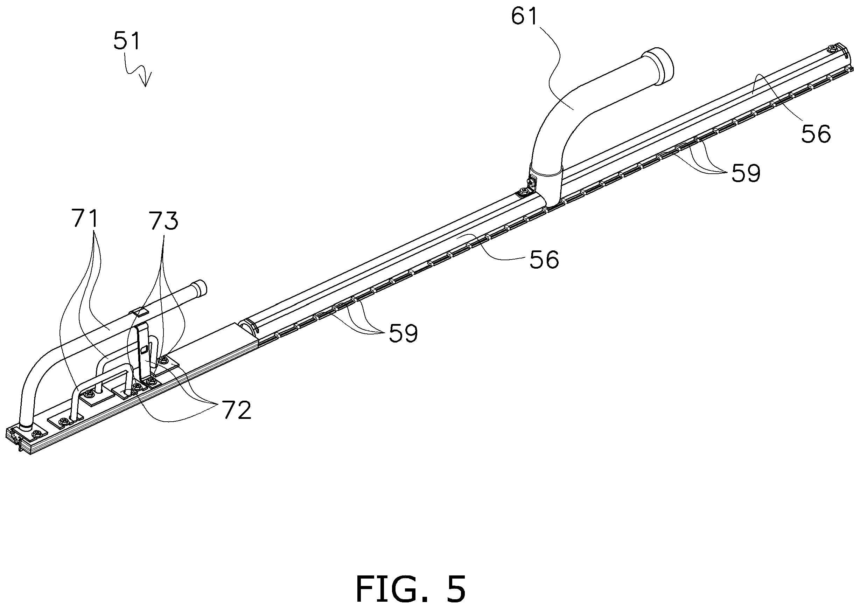

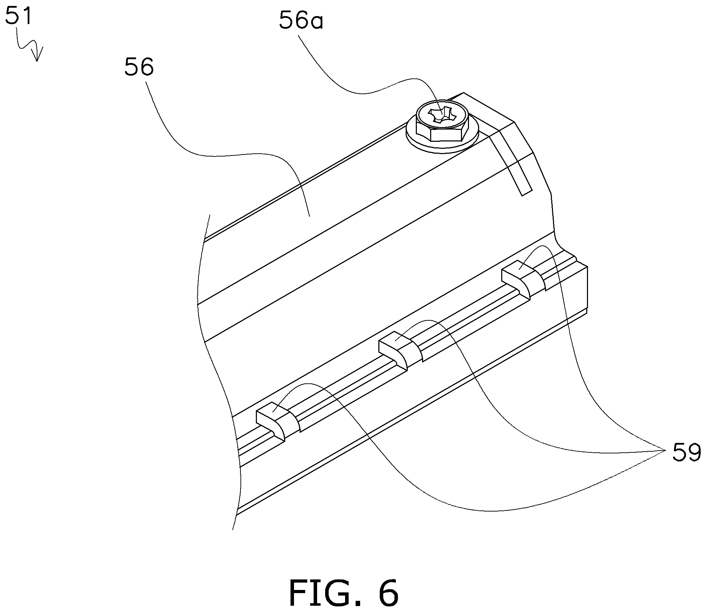

FIG. 5 depicts the entirety of the first header 51. This figure also indicates that the gas-side pipe 61 and the liquid-side pipe 71 are connected to the first header 51. Around the gas-side pipe 61, there is provided a cover 56 covering the plurality of plates 58 to form a refrigerant flow path. As depicted in FIG. 6, the cover 56 is bound to the plates 58 by a latch 56a prior to furnace brazing. The latch 56a is a bolt having a thread. The latch 56a inhibits relative displacement between the cover 56, the plates 58, and the outer wall member 57 during furnace brazing.

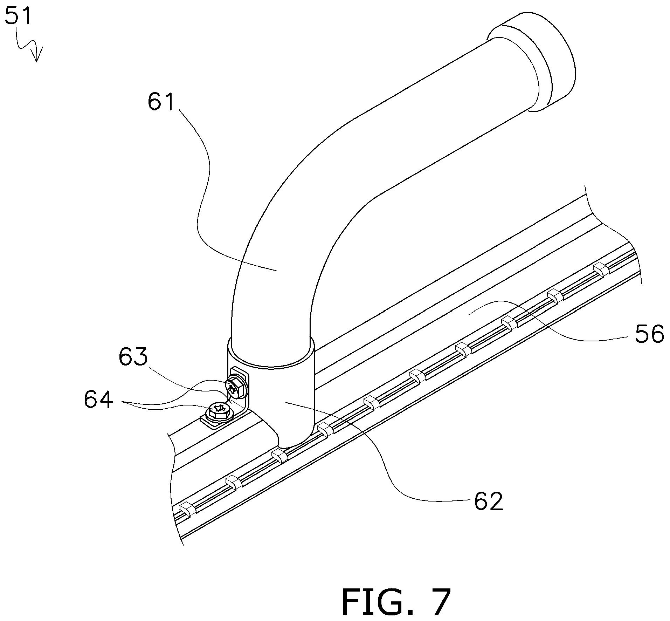

As depicted in FIG. 7, the cover 56 and the gas-side pipe 61 are connected at a portion provided with a sleeve 62, a bracket 63, and latches 64. The cover 56 has an opening at a portion provided with the sleeve 62. The gas-side pipe 61 and the first header 51 can give and receive a refrigerant via the opening. The sleeve 62 is a clad material fixing the cover 56 and the gas-side pipe 61 with each other by furnace brazing. The bracket 63 is bound to both the cover 56 and the sleeve 62 by the latches 64 prior to furnace brazing. Each of the latches 64 is a bolt having a thread. The latches 64 inhibit relative displacement between the cover 56 and the sleeve 62 during furnace brazing.

### (1-5) Periphery of the liquid-side pipe 71

Referring to FIG. 5 again, around the liquid-side pipe 71 connected to an end of the first header 51, there is provided a pipe retainer plate 72. The pipe retainer plate 72 is bound to the first header 51 by a latch 73 prior to furnace brazing. The latch 73 is a bolt having a thread. The latch 73 inhibits relative displacement between the pipe retainer plate 72 and the first header 51 during furnace brazing.

### (1-6) Periphery of the turn-back pipe 81

FIG. 4 to be referred to again depicts also a structure of the second header 52. The second header 52 is structured similarly to the first header 51.

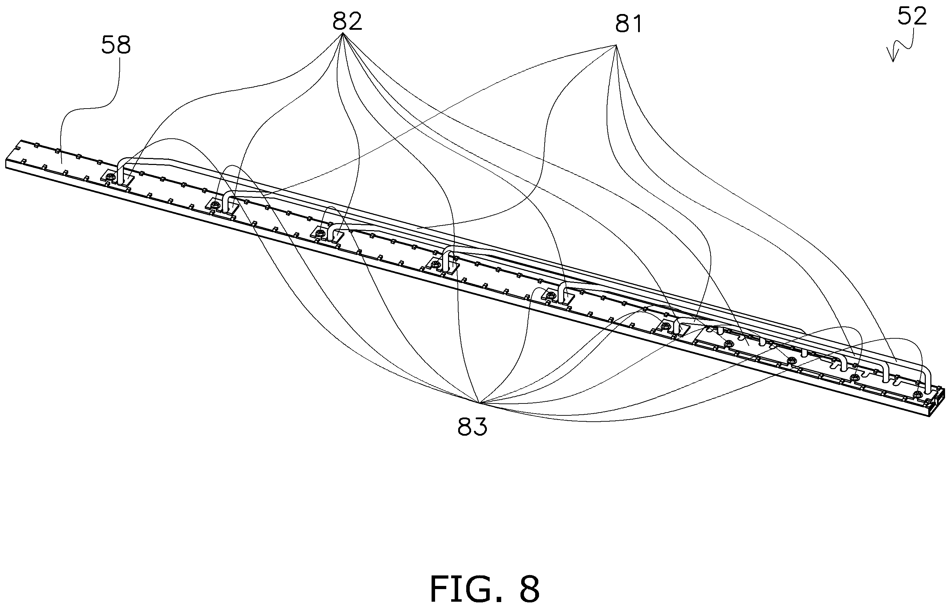

FIG. 8 depicts the entirety of the second header 52. This figure also indicates that a plurality of turn-back pipes 81 are connected to the second header 52. Around the turn-back pipes 81, there are provided a plurality of pipe retainer plates 82. The pipe retainer plates 82 are bound to the plates 58 by latches 83 such as bolts prior to furnace brazing. Each of the latch 83 is a bolt having a thread. The latches 83 inhibit relative displacement between the pipe retainer plates 82 and the plates 58 during furnace brazing.

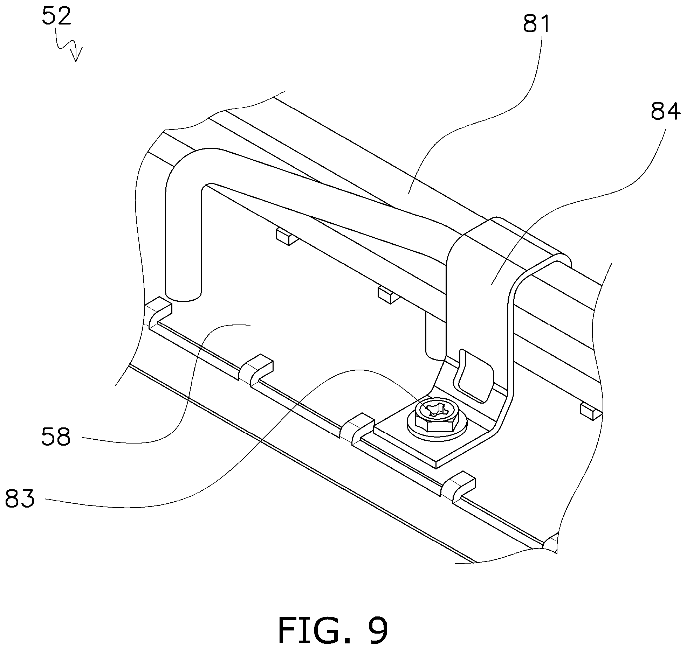

As depicted in FIG. 9, there is also provided a pipe retainer plate 84 collectively retaining the plurality of turn-back pipes 81. The pipe retainer plate 84 is bound to the plates 58 by the latch 83 such as a bolt prior to furnace brazing, to inhibit relative displacement between the pipe retainer plate 84 and the plates 58.

### (2) Manufacturing method

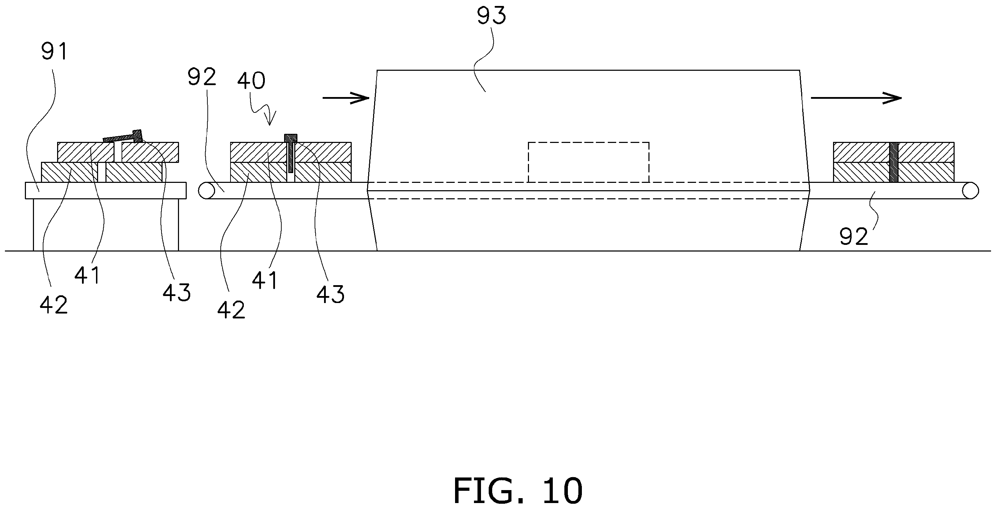

FIG. 10 depicts manufacturing equipment for the heat source heat exchanger 13. Initially, a first member 41, a second member 42, and a latch 43 are prepared on a mount base 91. The first member 41 and the second member 42 are to be fixed to each other by furnace brazing, and at least one of the members is a clad material.

The first member 41 corresponds to the cover 56 around the gas-side pipe 61, the pipe retainer plate 72 around the liquid-side pipe 71, the pipe retainer plates 82 around the turn-back pipes 81, and the like.

The second member 42 corresponds to the sleeve 62 the plates 58, and the cover 56 in some cases, which are provided around the gas-side pipe 61, the plates 58 around the liquid-side pipe 71, the plates 58 around the turn-back pipes 81, and the like.

The latch 43 corresponds to the latch 56a and the latch 64 around the gas-side pipe 61, the latch 73 around the liquid-side pipe 71, and the latch 83 around the turn-back pipes 81.

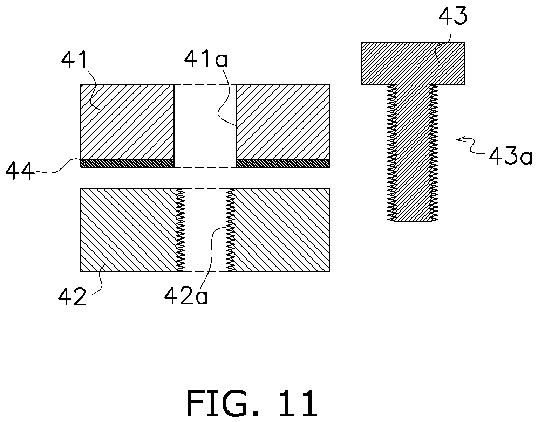

FIG. 11 to FIG. 13 depict a manufacturing method according to the first embodiment. FIG. 11 depicts a first step in the manufacturing method. The first member 41 is provided with a first hole 41a. The first hole 41a penetrates the first member 41. The first member 41 is a clad material, in other words, a plate provided with a brazing filler material 44. The second member 42 is provided with a second hole 42a. The second hole 42a is constituted as a through hole penetrating the second member 42. The second hole 42a is constituted as a screw hole. The latch 43 is for mutually binding the first member and the second member, and is used for preliminary fixing. The latch 43 is constituted as a bolt. The latch 43 as the bolt has a surface in a sawtooth shape 43a of a thread to be engaged with the second hole 42a as the screw hole. The latch 43 is made of an aluminum alloy containing manganese by 1.5% or less and copper by 1.0% or less. Here, the latch 43 may contain manganese by 1.0% or less. The material of the latch 43 according to the present embodiment is expressed by a number in the 3000s according to the ISO standards for aluminum alloys. Aluminum alloys expressed by numbers in the 3000s are aluminum-manganese based alloys, examples of which include No. 3003 and No. 3004.

The latch 43 and the first member 41 come into contact with each other to generate a first potential difference V1. The latch 43 and the second member 42 come into contact with each other to generate a second potential difference V2. Both the first potential difference V1 and the second potential difference V2 are 100 mV or less.

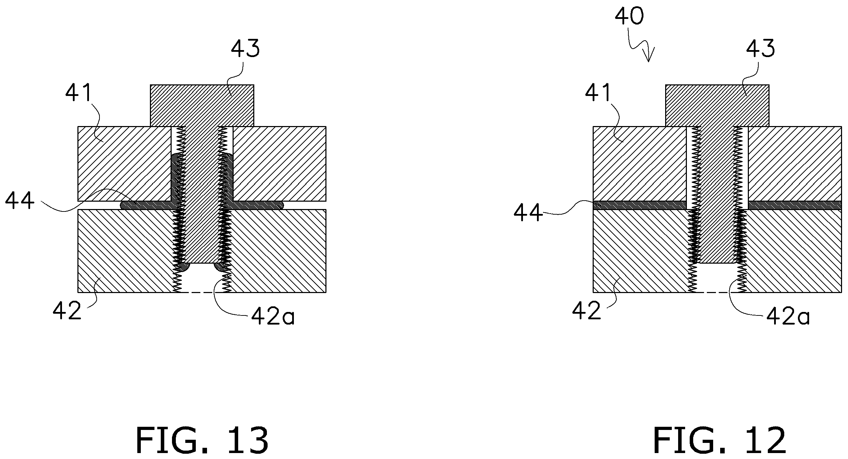

FIG. 12 depicts a second step in the manufacturing method. The latch 43 is disposed in the first hole 41a and the second hole 42a. Subsequently, the bolt constituted by the latch 43 is fastened to form an assembly 40. The bolt is fastened with fastening torque having a value equal to or less than 0.3 N·m.

Next, as depicted in FIG. 10, the assembly 40 is mounted on a conveyor 92. The conveyor 92 slowly shifts the assembly 40 to cause the assembly 40 to pass through a furnace 93. The assembly 40 is heated in the furnace 93, whereby the furnace brazing is performed.

FIG. 13 depicts a third step in the manufacturing method. The brazing filler material 44 melted out of the clad material attaches the latch 43 to the first member 41 and the second member 42. The assembly 40 is then cooled outside the furnace 93 to fix the latch 43 to the first member 41 and the second member 42.

### (3) Characteristics

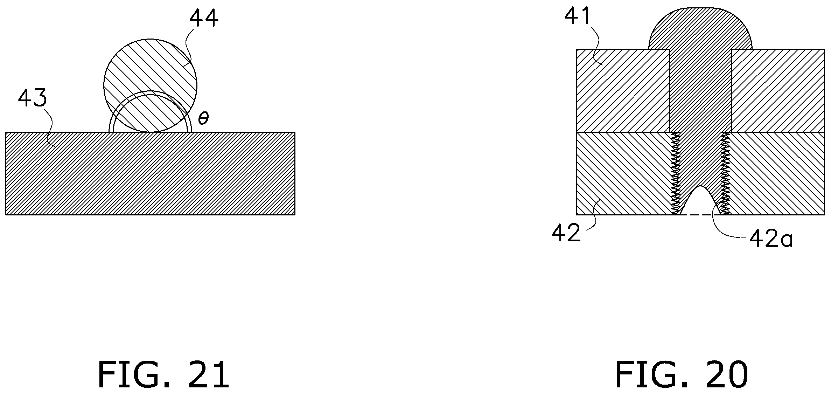

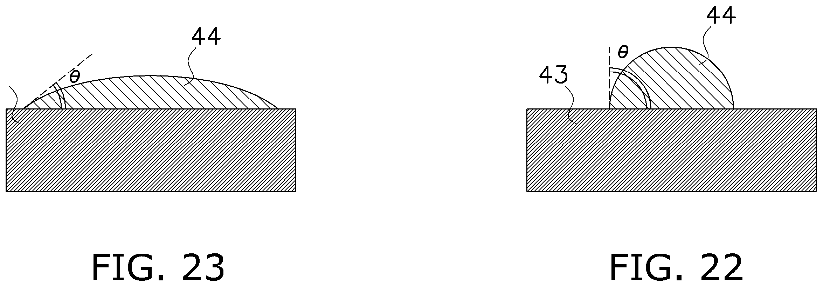

(3-1)
Generally, when a base material is brazed, good "wettability" between the base material and the brazing filler material is required. Wettability means affinity between the base material and the brazing filler material. FIG. 21 to FIG. 23 illustrate the wettability between the latch 43, which is a base material, and the brazing filler material 44. Wettability can be observed as the contact angle θ between the latch 43, which is solid, and the brazing filler material 44, which is liquid. FIG. 21 shows a state of poor wettability between the latch 43 and brazing filler metal 44, in which the contact angle θ is a large value of 180°. FIG. 22 shows a state of moderate wettability between the latch 43 and the brazing filler material 44, in which the contact angle θ is a smaller value of 90°. FIG. 23 shows a state of good wettability between the latch 43 and the brazing filler material 44, in which the contact angle θ is an even smaller value of less than 90°.

When the base material has a low manganese content, wettability improves when the brazing filler material is placed on the base material. Conversely, when the base material has a high manganese content, the oxide film formed on the base material becomes more robust, leading to poorer wettability. The material of the latch 43 is represented by a number in the 3000 series of the ISO aluminum alloy standard. Aluminum alloys designated by numbers in the 1000, 3000, and 4000 series have lower manganese content than those in the 2000 and 5000 series. Therefore, adopting a 3000-series aluminum alloy can improve the wettability of the latch 43. Furthermore, the latch 43 is made of an aluminum alloy containing manganese by 1.5% or less as well as copper by 1.0% or less. This manganese content value of 1.5% or less is sufficiently low to ensure wettability. When the manganese content of the latch 43 is 1.0% or less, wettability is further improved.

Hence, the latch 43 is less likely to repel the brazing filler material or induce galvanic corrosion, and is therefore easily fixed to the first member 41 and the second member 42. This eliminates the need for complicated steps of welding, pipe expansion, swaging, or the like in the manufacturing process. As a result, a cost increase for the heat exchanger due to dedicated equipment necessary for the complicated steps can be avoided.
(3-2)
   The latch 43 is used for assembling the stacked header. The stacked head is thus easily assembled to achieve a cost reduction for the heat source heat exchanger 13.
(3-3)
   The latch 43 as a bolt and the second hole 42a as a screw hole are engaged with each other. The first member 41 and the second member 42 are thus fixed firmly.
(3-4)
   The latch 43 and the first member 41 or the second member 42 are made of an identical material. Accordingly, a contact site between the members does not cause galvanic corrosion.
(3-5)
   The latch 43 as a bolt is fastened with fastening torque having a value as small as 0.3 N·m or less. Accordingly, the bolt made of a material having poor hardness is less likely to be broken.
(3-6)
   In manufacture of the heat source heat exchanger 13, the assembly 40 is mounted on the conveyor 92. The conveyor 92 as a vibration source may cause relative displacement between the members constituting the assembly 40. However, the assembly 40 is preliminarily fixed by the latch 43 to inhibit displacement, and in-furnace conveyance is therefore less likely to adversely affect quality of the heat source heat exchanger 13.

### (4) Modification examples

Description is made hereinafter to modification examples of the first embodiment. A plurality of modification examples may be combined together.

### (4-1) First modification example

According to the first embodiment, the second hole 42a is constituted as a screw hole. Furthermore, the latch 43 is constituted as a bolt. Alternatively, the second hole 42a does not need to be specifically constituted as a screw hole. Still alternatively, the latch 43 may be constituted as a rod having no thread. Further alternatively, both of them may be applicable.

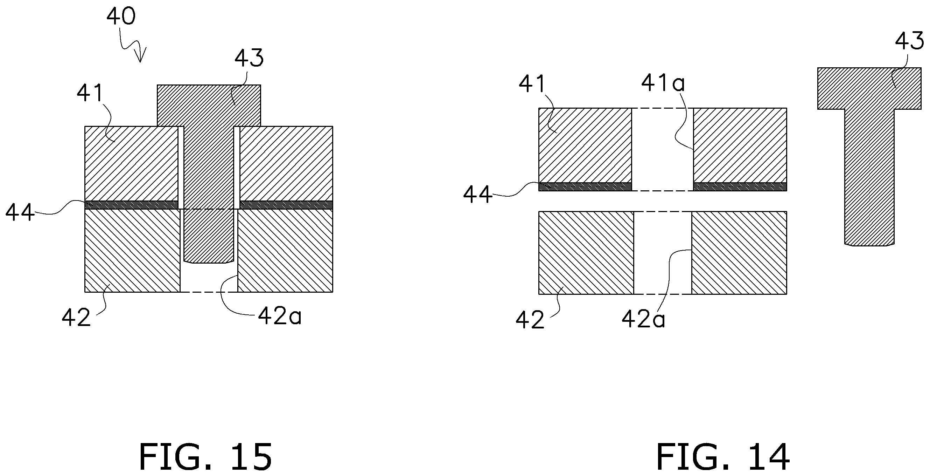

FIG. 14 to FIG. 16 depict a manufacturing method according to the first modification example of the first embodiment. FIG. 14 depicts a first step in the manufacturing method. This figure indicates that the second hole 42a is not a screw hole and that the latch 43 is a rod having no thread.

FIG. 15 depicts a second step in the manufacturing method. The latch 43 is disposed in the first hole 41a and the second hole 42a. By setting the diameters of the first hole 41a and the second hole 42a appropriately, the clearances can be reduced, inhibiting displacement of the first member 41 and the second member 42.

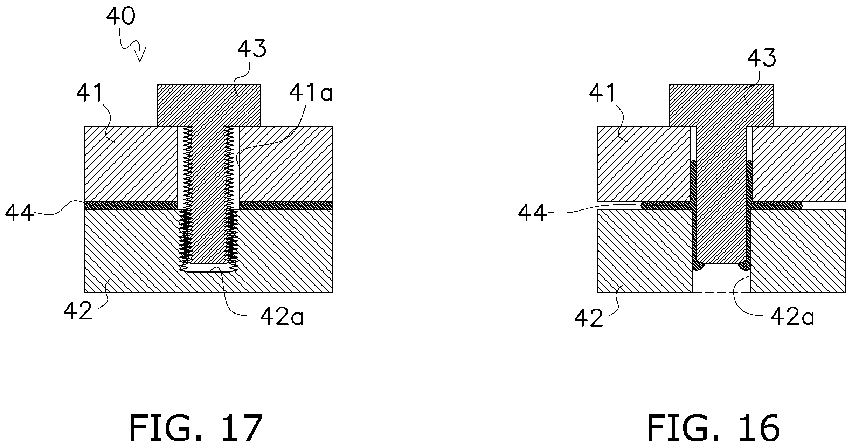

FIG. 16 depicts a third step in the manufacturing method. The brazing filler material 44 melted out of the clad material attaches the latch 43 to the first member 41 and the second member 42. The assembly 40 is then cooled outside the furnace 93 to fix the latch 43 to the first member 41 and the second member 42.

### (4-2) Second modification example

According to the first embodiment, the first member 41 or the second member 42, which is constituted as a clad material, is provided with the brazing filler material 44 which contributes to furnace brazing. Alternatively, both the first member and the second member 42 may be prepared as bare materials and a brazing filler material provided separately from the first member and the second member may be disposed at a joint portion therebetween.

### (4-3) Third modification example

According to the first embodiment, the second hole 42a is constituted as a through hole penetrating the second member 42. Alternatively, as depicted in FIG. 17, the second hole 42a may be constituted as a concave portion having a dead end.

### <Second embodiment>

### (1) Configuration

The second embodiment is quite similar to the first embodiment in terms of structures, but is different in terms of materials. Description is made hereinafter to a manufacturing method according to the second embodiment as well as differences in materials.

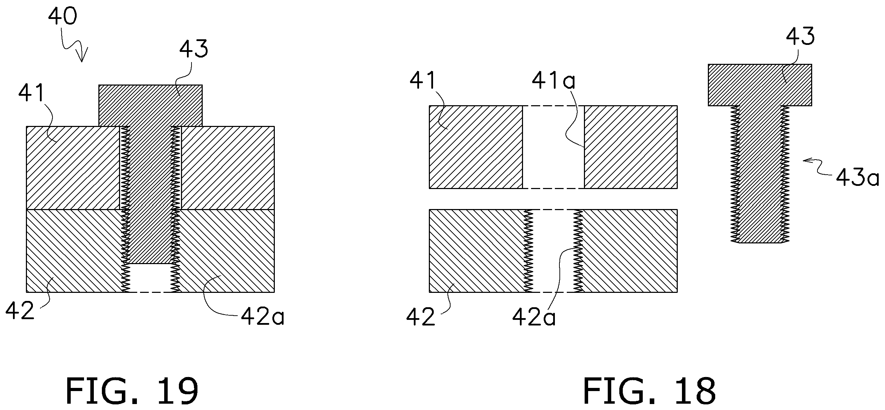

FIG. 18 to FIG. 20 depict the manufacturing method according to the second embodiment. FIG. 18 depicts a first step in the manufacturing method. The first member 41 is provided with the first hole 41a. The second member 42 is provided with the second hole 42a. The second hole 42a is constituted as a screw hole. The first member 41 and the second member 42 are bare materials, in other words, plates not provided with the brazing filler material 44. The latch 43 is constituted as a bolt.

Similarly to the first embodiment, the latch 43 is made of an aluminum alloy containing manganese by 1.5% or less and copper by 1.0% or less. Unlike the first embodiment, the latch 43 according to the present embodiment is made of a material expressed by a number in the 4000s according to the ISO standards for aluminum alloys. In other words, the material of the latch 43 is a brazing filler material. Aluminum alloys expressed by numbers in the 4000s are aluminum-silicon based alloys, examples of which includes No. 4043 and the like.

FIG. 19 depicts a second step in the manufacturing method. The latch 43 is disposed in the first hole 41a and the second hole 42a. Subsequently, the bolt constituted by the latch 43 is fastened to form the assembly 40. The bolt is fastened with fastening torque having a value similar to that according to the first embodiment.

FIG. 20 depicts a third step in the manufacturing method. During furnace brazing, the latch 43 made of the brazing filler material is melted to be attached to the first member 41 and the second member 42. The assembly 40 is then cooled outside the furnace 93 to fix the latch 43 once melted to the first member 41 and the second member 42.

### (2) Characteristics

The material of the latch 43 is represented by a number in the 4000 series of the ISO aluminum alloy standard. As mentioned earlier, aluminum alloys designated by numbers in the 1000, 3000, and 4000 series have lower manganese content than those in the 2000 and 5000 series. Therefore, adopting a 4000 series aluminum alloy improves the wettability of latch 43.

Furthermore, the aluminum alloy constituting the latch 43 is a brazing filler material. Accordingly, a contact site between members is less likely to cause corrosion because galvanic current generated at the contact site is small enough to be ignored.

### (3) Modification examples

The modification examples of the first embodiment are applicable to the present embodiment.

### <Conclusion>

The embodiments of the present disclosure have been described above. Various changes to modes and details should be available without departing from the object and the scope of the present disclosure recited in the claims.

### REFERENCE SIGNS LIST

10: heat source unit
13: heat source heat exchanger (heat exchanger)
20: utilization unit
23: utilization heat exchanger
40: assembly
41: first member
41a: first hole
42: second member
42a: second hole
43: latch
43a: sawtooth shape
44: brazing filler material
51: first header (stacked header)
52: second header (stacked header)
53: heat exchange unit
54: refrigerant pipe
55: fin
56: cover
56a: latch
57: outer wall member
58: plate
59: swaging claw
61: gas-side pipe
62: sleeve
63: bracket
64: latch
71: liquid-side pipe
72: pipe retainer plate
73: latch
81: turn-back pipe
82: pipe retainer plate
83: latch
84: pipe retainer plate
92: conveyor
93: furnace
100: refrigeration apparatus
V1: first potential difference
V2: second potential difference

### CITATION LIST

### PATENT LITERATURE

Patent Literature 1: Japanese Laid-Open Patent Publication No. 2021-025718A

## Claims

1. A heat exchanger (13) comprising:
a first member (41) provided with a first hole (41a) and made of aluminum;
a second member (42) provided with a second hole (42a) and made of aluminum; and
a latch (43) disposed in the first hole and the second hole, fixed to the first member and the second member, and made of an aluminum alloy containing manganese by 1.5% or less and copper by 1.0% or less.

2. The heat exchanger according to claim 1, further comprising
a stacked header (51, 52), wherein
at least one of the first member or the second member is a plate (58) to be stacked in the stacked header.

3. The heat exchanger according to claim 1 or 2, wherein
the second hole is a screw hole, and
the latch has a surface in a sawtooth shape (43a) for engagement with the screw hole.

4. The heat exchanger according to any one of claims 1 to 3, wherein
both a first potential difference (V1) generated by contact between the latch and the first member and a second potential difference (V2) generated by contact between the latch and the second member are 100 mV or less.

5. The heat exchanger according to any one of claims 1 to 4, wherein
the latch is made of a material expressed by a number in 3000s or 4000s according to ISO standards for aluminum alloys.

6. The heat exchanger according to claim 5, wherein
the aluminum alloy is expressed by a number in 3000s according to ISO standards for aluminum alloys, and
the latch is brazed to both the first member and the second member.

7. The heat exchanger according to claim 5, wherein
the aluminum alloy is expressed by a number in 4000s according to ISO standards for aluminum alloys.

8. A refrigeration apparatus (100) comprising:
the heat exchanger (13) according to any one of claims 1 to 7.

9. A method of manufacturing a heat exchanger (13), the method comprising:
preparing a first member (41) provided with a first hole (41a) and made of aluminum and a second member (42) provided with a second hole (42a) and made of aluminum;
preparing a latch (43) made of an aluminum alloy containing manganese by 1.5% or less and copper by 1.0% or less;
forming an assembly (40) by disposing the latch in the first hole and the second hole; and
heating the assembly in a furnace (93) to fix the latch to the first member and the second member.

10. The manufacturing method according to claim 9, wherein
the second hole is a screw hole, and
the latch is a bolt.

11. The manufacturing method according to claim 10, wherein
the bolt is fastened with fastening torque having a value equal to or less than 0.3 N·m.

12. The manufacturing method according to any one of claims 9 to 11, wherein
the assembly is mounted on a conveyor (92) before the assembly is heated in the furnace.

13. The manufacturing method according to any one of claims 9 to 12, wherein
the latch is made of a material expressed by a number in 3000s according to ISO standards for aluminum alloys, and
the assembly is provided with a brazing filler material (44) before the assembly is heated in the furnace.

14. The manufacturing method according to any one of claims 9 to 12, wherein
the latch is made of a material expressed by a number in 4000s according to ISO standards for aluminum alloys, and
the latch is melted when the assembly is heated in the furnace.
